# EUROPEAN PATENT SPECIFICATION

(11) **EP 0 577 276 B1**
(45) Date of publication and mention of the grant of the patent: **20.08.1997**
(21) Application number: 93304473.7
(22) Date of filing: 09.06.1993
(51) Int. Cl.: C08L 83/07, C08K 3/22

(54) **High strength elastomeric desiccant**
Hochfestes, elastomeres Trockungsmittel
Composition élastomère dessiccative à haute résistance

(30) Priority: 30.06.1992 US 906625
(43) Date of publication of application: 05.01.1994
(73) Proprietor: DOW CORNING CORPORATION, Midland Michigan 48686-0994 (US)
(72) Inventor: Kosal, Diane Marie, Michigan 48640 (US); Schulz, William James, Jr., Midland, Michigan (US)
(74) Representative: Kyle, Diana

(56) References cited:
- EP-A- 0 096 888
- EP-A- 0 198 419
- EP-A- 0 457 454
- EP-A- 0 596 677
- EP-A- 0 597 613
- US-A- 4 081 397
- US-A- 4 950 344

## Description

This invention relates to a desiccant material which has a silicone elastomeric composition as binder with a molecular sieve desiccant and alumina trihydrate thixotropy additive.

U.S. Patent No. 4,622,249, issued November 11, 1986, teaches a multipane unit having a flexible spacing and sealing assembly. The inner element is self-adhered to the marginal periphery of the inner, facing surfaces of the sheets. This inner element is preferably composed of a desiccant material such as crystalline metal aluminasilicate or crystalline zeolites dispersed in a silicone glazing adhesive sealant. The materials used as the inner element in this patent suffer in that the physical properties are too low and the curing system gives off volatile byproducts which can cause fogging of the inner surfaces of the panes.

The claimed invention is a multiple part silicone elastomeric composition which is cured through the platinum catalyzed reaction of alkenyl radicals on silicon with hydrogen atoms on silicon is filled with molecular sieves as a desiccant and alumina trihydrate as a thixotropy additive and desiccant. The composition is especially useful as a formable desiccant in the manufacture of insulated glass windows.

This invention relates to a silicone composition comprising (A) 100 parts by weight of alkenyl containing polydiorganosiloxane having a viscosity of from 2 to 25 Pa·s at 25°C., (B) an organohydrogensiloxane crosslinking agent in an amount to provide a molar ratio of silicon-bonded hydrogen atoms of (B) to silicon-bonded alkenyl radicals of (A) in the range of 1:1 to 10:1, the organohydrogensiloxane containing an average of more than two silicone bonded hydrogen atoms per molecule, (C) sufficient platinum catalyst to catalyze the cure of the composition, (D) from 25 to 250 parts by weight, based on 100 parts by weight of (A), of molecular sieves as a powder, and (E) from 1 to 40 parts by weight, based on 100 parts by weight of (A), of alumina trihydrate, the mixture forming a self-curing elastomer.

The silicone composition of this invention is stored as a two-part silicone composition comprising as part A; (A) 50 parts by weight of alkenyl containing polydiorganosiloxane, (C) sufficient platinum catalyst to catalyze the cure of the composition, (D) from 12 to 125 parts of molecular sieves as a powder, and (E) from 1 to 20 parts of alumina trihydrate and as part B; (A) 50 parts by weight of alkenyl containing polydiorganosiloxane, (B) sufficient organohydrogensiloxane crosslinking agent to react with the alkenyl radicals of (A), the organohydrogensiloxane containing an average of more than two silicon bonded hydrogen atoms per molecule, (D) from 13 to 125 parts by weight of molecular sieves as a powder, and (E) from 1 to 20 parts by weight of alumina trihydrate, the two parts, upon being mixed together forming a self-curing elastomer.

The silicone composition of this invention is stored as two or more parts which, when mixed together, cure to form an elastomer which can act as a desiccant. The mixture contains an alkenyl containing polydiorganosiloxane, a crosslinking agent which contains hydrogen atoms attached to silicon atoms and a platinum catalyst. These ingredients, when mixed together, cure by the well known hydrosilylation reaction, giving a crosslinked polymer with no byproducts produced by the curing reaction. The cured composition can give a tensile strength as high as 5 MPa. with no reinforcing filler present.

Ingredient (A) is a polydiorganosiloxane containing alkenyl groups such as vinyl and/or hexenyl groups. In order for the polymer to properly crosslink, at least 2 alkenyl groups per molecule are needed. Generally the polydiorganosiloxane is diorganoalkenylsiloxy terminated with the alkenyl group being a vinyl group. The organo groups of the polydiorganosiloxane are individually monovalent hydrocarbon radicals or substituted monovalent hydrocarbon radicals containing from 1 to 20 carbon atoms. The organo radicals can be identical or different, such as methyl or ethyl, substituted alkyl such as chloromethyl, 3-chloropropyl or 3,3,3-trifluoropropyl, cycloalkyl such as cyclohexyl or aryl such as phenyl. A preferred radical is the methyl radical. For use as elastomer compositions which can be used as a matrix for desiccant, the siloxane is polymerized to a viscosity of from 2 to 25 Pa·s at 25°C., preferably from 2 to 10 Pa·s. For other applications, it is possible to use either higher or lower viscosity polymers. The polydiorganosiloxane (A) can be a single polymer or a mixture of different polymers.

Methods for preparing the polydiorganosiloxanes used as ingredient (A) are sufficiently disclosed in the patent and other literature that a detailed description in this specification is not necessary.

The physical properties of the cured composition are affected by the polymer size or viscosity used as well as the amount of crosslinking. For example, use of polymer mixtures having one polymer with only terminal alkenyl groups and another polymer with both terminal alkenyl groups and pendant alkenyl groups on the chain is taught in U.S. Patent No. 4,753,978, issued June 28, 1988 and in U.S. Patent No. 5,110,845, issued May 5, 1992, both of which show polydiorganosiloxanes and their mixtures which can be used in this invention.

The crosslinking agent is an organohydrogensiloxane containing an average of more than two silicon bonded hydrogen atoms per molecule. The organohydrogensiloxane contains from as few as four silicon atoms per molecule up to an average of 100 or more and can have a viscosity of up to 10 Pa·s or higher at 25°C. The repeating units of this ingredient include but are not limited to HSiO_{3/2}, R¹HSiO and/or R¹₂HSiO_{1/2} in addition to one or more of R¹SiO_{3/2}, R¹₂SiO, R¹₃SiO_{1/2} and SiO_{4/2} units. In these formulas, R¹ represents a monovalent hydrocarbon or halocarbon radical as defined above for R of ingredient A.

Proper curing of the present composition requires that ingredients A, B and C be miscible with one another. To ensure sufficient miscibility, it is preferred that a majority of the silicon bonded hydrocarbon radicals that are present in the higher concentration in polydiorganosiloxane (A) and organohydrogensiloxane (B) be selected from the same class, e.g. alkyl radical. In particularly preferred compositions, these hydrocarbon radicals are methyl or combinations of methyl with either 3.3.3-trifluoropropyl or phenyl.

The molar ratio of silicon bonded hydrogen atoms to vinyl or other ethylenically unsaturated hydrocarbon radicals in compositions curable by a hydrosilylation reaction is important with respect to the properties of the cured elastomer. The optimum ratio for the present curable compositions will be determined at least in part by the molecular weight of ingredient A and the type of curing agent. The molar ratio of silicon bonded hydrogen atoms to silicon bonded alkenyl radicals is generally in the range of 1:1 to 10:1 with a preferred range of 2.5:1 to 3.5:1. The optimum range of this ratio can be readily determined by those skilled in the art with a minimum of experimentation.

Hydrosilylation reactions are typically conducted in the presence of a catalyst that is a metal from the platinum group of the periodic table or a compound of such a metal. Platinum is the preferred catalyst. Platinum compounds such as hexachloroplatinic acid and particularly complexes of these compounds with relatively low molecular weight vinyl-containing organosiloxane compounds are preferred catalysts because of their high activity and compatibility with the organosiloxane reactants. These complexes are described in U.S. Patent No. 3,419,593, issued December 31, 1968.

The platinum containing catalyst can be present in an amount equivalent to as little as one part by weight of platinum per one million parts by weight of curable composition. Catalyst concentrations equivalent to from 5 to 100 parts of platinum per million of curable composition are preferred to achieve a practical curing rate. Higher concentrations of platinum provide only marginal improvement in curing rate and are therefore economically unattractive.

Mixtures of the aforementioned polydiorganosiloxane (A), crosslinking agent (B) and platinum catalyst (C) may begin to cure at ambient temperatures. To obtain a longer working time or "pot life", the activity of the catalyst under ambient conditions can be retarded or suppressed by addition of a suitable inhibitor. Known inhibitors include the acetylenic compounds disclosed in U.S. Patent No. 3,445,420, issued May 20, 1969. Acetylenic alcohols such as 2-methyl-3-butyn-2-ol and ethynyl cyclohexanol constitute a preferred class of inhibitors that will suppress the activity of a platinum-containing catalyst at 25°C., but cure rapidly at temperatures of 70°C. or higher.

The composition of this invention is particularly effective as a desiccant because it includes molecular sieves, which adsorb gases and liquids and because the polydiorganosiloxane in its cured state is particularly porous to water vapor molecules. The preferred desiccant material is molecular sieve or zeolite prepared from a mixture of oxides, such as Na₂O, K₂O, MgO, Al₂O₃, SiO₂ and Fe₂O₃. A preferred molecular sieve has a nominal pore diameter of about 0.3 nanometers (3 angstroms) and this is the preferred material for absorbing water vapor. Molecular sieves having larger pore diameters such as 1 nanometer (10 angstroms) can be used to absorb not only water vapor but other gases which may be present. The molecular sieves are used in this invention as a powder, preferably having an average particle diameter of less than 10 micrometers. Such molecular sieves are commercially available and are described and prepared in U.S. Patent No. 2,882,243, issued April 14, 1959 and No. 2,882,244, issued April 14, 1959.

The amount of water vapor which can be adsorbed is related to the amount of molecular sieves in the composition. For use as a desiccant material in the seal of an insulated glass unit, for example, it is preferred that the amount of molecular sieves be as high as practical, as high as 250 parts may be used. If a lower amount of desiccant ability is suitable, as low as 25 parts or lower may be used. A preferred amount is from 50 to 150 parts by weight of molecular sieves in the form of a powder per 100 parts by weight of polydiorganosiloxane (A), with the most preferred amount being from 100 to 150 parts. The amount of molecular sieves which can be used is related to the desired thickness of the composition after mixing and the viscosity of the polymers used in the composition.

When molecular sieves are used without modifying filler in a polydiorganosiloxane composition, the resulting mixture tends to be either flowable or too stiff to be properly handled. It has been discovered that if alumina trihydrate is added to such a mixture, the result is a thixotropic mixture which can be used as a dispensable silicone matrix carrier and handled in normal dispensing equipment. Yet, this mixture thickens upon application to a non flowing or low slump material as soon as it is extruded into place on a substrate. The alumina trihydrate used is also in the form of a powder, a median particle diameter in the range of 1.7 to 2.2 micrometers is preferred, for example. Larger diameter powder may also be used, but it is generally preferred to use fine powders, less than 10 micrometers for the average particle size for the molecular sieves and for the alumina trihydrate, so that the resulting composition is of a uniform consistency throughout. The amount of alumina trihydrate can be from 1 to 40 parts by weight per 100 parts by weight of the polydiorganosiloxane (A). It has been found that alumina trihydrate is a particularly effective thickening agent in this composition so that effective thickening takes place with low amounts, from 3 to 20 parts being preferred. The alumina trihydrate may also act as a desiccant.

Other fillers can be used to modify the properties of the composition. However, use of reinforcing or extending fillers should be evaluated for effect upon the composition and its properties. If a filler such as fume silica is used, the composition can quickly become too stiff to be easily extruded into place; lowering the amount of molecular sieves can lower the thickness, but will also lower the moisture absorbing ability of the composition. Dilution of the composition with other fillers such as ground quartz is not recommended for the same reason.

In addition to the above ingredients, the composition can include the conventional additives which are added to impart or enhance certain properties of the cured elastomer or facilitate processing of the curable composition. Typical additives include, but are not limited to, pigments, dyes, adhesion promoters and heat and/or ultraviolet light stabilizers. The effect of any such additives should be evaluated as to their result in change of properties of the composition.

The composition of this invention is prepared by a simple mixing of the ingredients. When all of the ingredients are mixed together, the composition will begin to cure unless a cure inhibitor is present. The equipment needed for the mixing depends upon the viscosity of the polydiorganosiloxane used and the amount of molecular sieves and alumina trihydrate that is added. If the composition is not to be used immediately after mixing, it should be prepared in at least two parts. If the organohydrogensiloxane (B) is placed in one part and the platinum catalyst (C) is placed in another part, the individual parts will be shelf stable. The amounts of polydiorganosiloxane (A), organohydrogensiloxane (B), platinum catalyst (C), molecular sieves (D) and alumina trihydrate (E) that are placed in each part can be varied to obtain the desired result. A convenient system distributes the ingredients into two parts so that the polydiorganosiloxane, molecular sieves and alumina trihydrate are divided equally between the two parts. The organohydrogensiloxane is added to one part and the platinum catalyst is added to the other part. This results in a two part system where the two part are mixed together in equal amounts and the consistency of the two parts is about the same so that they can be easily mixed at the time of use. Other proportions of the ingredients can of course be used, as well as more than two parts if desired. Since the molecular sieves adsorb water vapor readily, exposure to moisture during processing should be avoided.

The composition of this invention is useful wherever an elastomeric desiccant material or adhesive desiccant material is desired. For example, the compositions are useful in insulated glass window construction.

The following examples are included for illustrative purposes only and should not be construed as limiting the invention which is properly set forth in the appended claims. All parts are parts by weight.

### Example 1 (COMPARATIVE)

A two part curable desiccant mixture was prepared.

First 100 g of dimethylvinylsiloxy endblocked polydimethylsiloxane having a viscosity of about 2.1 Pa·s at 25°C. and a vinyl content of about 0.108 weight percent (polydimethylsiloxane 1) was mixed with 0.4 g of chloroplatinic acid complex of divinyltetramethyldisiloxane diluted with dimethylvinylsiloxy endblocked polydimethylsiloxane to provide 0.7 weight percent platinum and 130 g of UOP(R) Molecular Sieve Type 3A to give a part A. Molecular Sieves Type 3A have a nominal pore diameter of about 0.3 nanometers ( 3 angstroms) and are available from the Union Carbide Corporation of Danbury, Connecticut, U.S.A. The molecular sieves used had an average particle diameter of less than 10 micrometers.

Then 75 g of the same polydimethylsiloxane of 2.1 Pa·s viscosity was mixed with 24 g of dimethylmethylhydrogenpolysiloxane having a viscosity of about 0.02 Pa·s at 25°C. and about 1 weight percent hydrogen, 1 g of trimethylsiloxy endblocked polymethylhydrogensiloxane having a viscosity of about 0.13 Pa·s at 25°C. and a silicon-bonded hydrogen atom content of about 1.6 percent by weight and 0.2 g of 1-ethynylcyclohexanol were mixed to give a part B.

When 10 parts of part A and 1 part of part B were mixed, the resulting mixture gave a slump value of 9.9 cm (3.9 inches) in 1 minute. Slump was measured in accordance with ASTM D 2202 where the mixture is placed in the slump jig, allowed to sit for 10 minutes and then the jig is placed in a vertical position, the plunger is advanced to expose the mixture and the amount of flow is measured after 1 minute and after 2 minutes.

### Example 2 (COMPARATIVE)

A similar composition was prepared with the addition of calcium carbonate filler to decrease the amount of slump.

First 100 g of the polydimethylsiloxane (1) was mixed with 2 g of dimethylvinylsiloxy endblocked copolymer of 78 mol percent dimethylsiloxane units and 22 mol percent of methylvinylsiloxane units having about 7.7 weight percent vinyl radicals and a viscosity of from 8 to 25 Pa·s at 25°C. (copolymer 2), 20 g of calcium stearate treated calcium carbonate filler having an average particle size of about 3 micrometers, 120 g of the molecular sieves of Example 1 and 0.4 g of the platinum catalyst of Example 1 to give a part A.

When 10 parts of A was mixed with 1 part of part B of Example 1, the mixture gave a slump of 1.2 cm (0.5 inches) after 1 minute and 3.8 cm (1.5 inches) after 2 minutes when tested as in Example 1.

### Example 3

A similar composition was prepared, but using alumina trihydrate to decrease the slump.

First, 112 g of the polydiorganosiloxane (1) was mixed with 2 g of copolymer (2), 119 g of the molecular sieves of Example 1, 30 g of alumina trihydrate having a median particle diameter of 1.7 to 2.2 micrometers (Micral 855 from Solem Industries, Inc. Norcross, Ga.) and 0.4 g of the platinum catalyst to give a part A.

Then 10 g of this part A was mixed with 1 part of the part B of Example 1 and tested for slump as in Example 1. This mixture gave a slump of 0.13 cm (0.05 inch) after 1 minute and 0.13 cm (0.05 inch) after 2 minutes.

A repeat of the above mixture gave a 1 minute slump of 0.20 cm (0.075 inch) and a 2 minute slump of 0.25 cm (0.1 inch).

A portion of the above mixture was press molded for 5 minutes at 150°C. to give a cured test sheet. The cured elastomer was measured for durometer in accordance with ASTM D 2240 and tensile strength and elongation in accordance with ASTM D 412. The results are shown in Table I.

**Table I**

| | |
|---|---|
| Durometer, Shore A | 72 |
| Tensile Strength, MPa | 3.6 |
| Elongation, percent | 77 |

### Example 4

First a mixture was prepared of 112 g of polydimethylsiloxane (1), 2 g of copolymer (2), 131 g of molecular sieves of Example 1, 18 g of the alumina trihydrate and 0.4 g of platinum catalyst.

Then 10 parts of this part A was mixed with 1 part of the part B of Example 1 and slump measured as in Example 1. After 1 minute the slump was 0.127 cm (0.05 inch) and after 2 minute the slump was 0.25 cm (0.1 inch).

A portion of the above mixture was press molded for 5 minutes at 150°C. to give a cured test sheet. The cured elastomer was measured as in Example 3. The results are shown in Table II.

**Table II**

| | |
|---|---|
| Durometer, Shore A | 74 |
| Tensile Strength, MPa | 2.54 |
| Elongation, percent | 46 |

### Comparison Example 5

First a mixture was prepared of 112 g of polydimethylsiloxane (1), 2 g of copolymer (2), 144.4 g of molecular sieves of Example 1, 30 g of the alumina trihydrate and 0.4 g of platinum catalyst.

Then 10 parts of this part A was mixed with 1 part of the part B of Example 1 and slump measured as in Example 1. This material was too thick to process properly.

### Example 6

A two part composition was prepared which could be mixed at a 1 to 1 ratio rather than at the 10 to 1 ratio used in the preceding examples.

A mixture was prepared from 100 g of polydimethylsiloxane (1), 1.7 g of copolymer (2), 117 g of molecular sieves of Example 1, 6.2 g of UOP(R) Molecular Sieve Type 13X (nominal pore diameter of 10 angstroms), 2.3 g of alumina trihydrate, 0.34 of the platinum catalyst and 0.03 g of black pigment to give part A.

Then a mixture was prepared from 100 g of the polydimethylsiloxane (1), 1.8 g of copolymer (2), 123 g of molecular sieves of Example 1, 6.5 g of Molecular Sieve Type 13X, 7.6 g of alumina trihydrate, 7.0 g of the dimethylmethylhydrogenpolysiloxane of part B, Example 1, 1.2 g of the polymethylhydrogensiloxane of part B, Example 1, 0.33 g of 1-ethynylcyclohexanol and 0.03 g of black pigment to give part B.

Part A had a viscosity of about 284 Pa·s and part B of about 328 Pa·s. When Part A and part B were mixed together in a 1:1 ratio by weight the mixture had a total of 55.1 percent molecular sieves and alumina trihydrate, with 2 percent being the alumina trihydrate. A sample slab was press cured for 5 minutes at 150°C. and tested with the cured material having the following properties: Durometer, Shore A 88, Tensile Strength, 3.6 MPa (529 psi), Elongation 51 percent and Tear Strength, die B, 14.5 kN/m (83 ppi). Slump was measured as in Example 1 with a reading after 1 minute of 6.3 cm (2.5 inch) and after 3 minutes of 10 cm (4 inches) plus. This measurement was taken 5 days after the original mixture was prepared.

Since the slump on the above material was more than desired, additional alumina trihydrate was added by mixing a total of 27.8 g of alumina trihydrate into 621 g of part A to give a total of 5.2 percent by weight of the material as alumina trihydrate. Part B was modified by adding 14.6 g of alumina trihydrate to 689 g of part B to give a total of 4.22 percent alumina trihydrate in the mixture. After mixing, the slump was 0.13 cm (0.05 inch) after one minute and after 2 minutes. When measured 1 day from the original part A and part B being prepared, the slump was 0.2 cm (0.075 inch) after 1 minute and after 2 minutes. Six days after part A and part B were prepared, the slump was 0.2cm (0.075 inch) after 1 minute and after 2 minutes.

## Claims

1. A silicone composition comprising
(A) 100 parts by weight of alkenyl containing polydiorganosiloxane having a viscosity of from 2 to 25 Pa.s at 25°C.,
(B) an organohydrogensiloxane crosslinking agent in an amount to provide a molar ratio of silicon-bonded hydrogen atoms of (B) to silicon-bonded alkenyl radicals of (A) in the range of 1:1 to 10:1, the organohydrogensiloxane containing an average of more than two silicon bonded hydrogen atoms per molecule,
(C) sufficient platinum catalyst to catalyze the cure of the composition,
(D) from 25 to 250 parts by weight, based on 100 parts by weight of (A), of a molecular sieve as a powder, and
(E) from 1 to 40 parts by weight, based on 100 parts by weight of (A) of alumina trihydrate, the mixture forming a self-curing elastomer.

2. A composition according to claim 1 wherein the composition is packaged in at least two parts, with the organohydrogensiloxane (B) and the platinum catalyst (C) located in separate parts.

3. A silicone composition according to claim 2, comprising as a first part; (A) 50 parts by weight of alkenyl-containing polydiorganosiloxane, (C) sufficient platinum catalyst to catalyze the cure of the composition, (D) from 12 to 125 parts of molecular sieves as a powder, and (E) from 1 to 20 parts of alumina trihydrate and as a second part; (A) 50 parts by weight of alkenyl containing polydiorganosiloxane, (B) an organohydrogensiloxane crosslinking agent in an amount to provide a molar ratio of silicon-bonded hydrogen atoms of (B) to silicon-bonded alkenyl radicals of (A) in the range of 1:1 to 10:1, the organohydrogensiloxane containing an average of more than two silicon bonded hydrogen atoms per molecule, (D) from 13 to 125 parts by weight of molecular sieves as a powder, and (E) from 1 to 20 parts by weight of alumina trihydrate, the two parts, upon being mixed together forming a self-curing elastomer.

4. A silicone composition according to any of claims 1 to 3, wherein the molecular sieve has a nominal pore diameter of 0.3 nanometer (3 angstrom) to 1.0 nonometers (10 angstroms).

5. A silicone composition according to any of claims 1 to 4, wherein the quantity of the molecular sieve (D) is in the range of 100 to 150 parts by weight, based on 100 parts by weight of (A).

6. A silicone composition according to any of claims 1 to 5, wherein the alumina trihydrate (E) has a medium particle diameter of 1.7 to 2.2 micrometres.

7. A silicone composition according to any of claims 1 to 6, wherein the quantity of the alumina trihydrate (E) is in the range of 3 to 20 parts by weight, based on 100 parts by weight of (A).

## Patentansprüche

1. Silicongemisch, enthaltend
(A) 100 Gewichtsteile eines Alkenylreste enthaltenden Polydiorganosiloxans mit einer Viskosität von 2 bis 25 Pa·s bei 25°C,
(B) ein Organohydrogensiloxan als Vernetzungsmittel in einer Menge, die ein Molverhältnis von an Silicium gebundenen Wasserstoffatomen in (B) zu an Silicium gebundenen Alkenylresten in (A) im Bereich von 1:1 bis 10:1 ergibt, wobei das Organohydrogensiloxan durchschnittlich mehr als zwei an Silicium gebundene Wasserstoffatome pro Molekül enthält,
(C) genügend Platinkatalysator, um die Härtung des Gemisches zu katalysieren,
(D) 25 bis 250 Gewichtsteile, bezogen auf 100 Gewichtsteile (A), eines pulverförmigen Molekularsiebes und
(E) 1 bis 40 Gewichtsteile, bezogen auf 100 Gewichtsteile (A), Aluminiumoxid-Trihydrat, wobei das Gemisch ein selbsthärtendes Elastomer bildet.

2. Gemisch nach Anspruch 1, wobei das Gemisch in mindestens zwei Teilen verpackt ist und das Organohydrogensiloxan (B) und der Platinkatalysator (C) in getrennten Teilen vorliegen.

3. Silicongemisch nach Anspruch 2, enthaltend als einen ersten Teil: (A) 50 Gewichtsteile eines Alkenylreste enthaltenden Polydiorganosiloxans, (C) genügend Platinkatalysator, um die Härtung des Gemisches zu katalysieren, (D) 12 bis 125 Teile pulverförmiges Molekularsieb und (E) 1 bis 20 Teile Aluminiumoxid-Trihydrat, und als zweiten Teil: (A) 50 Gewichtsteile eines Alkenylreste enthaltenden Polydiorganosiloxans, (B) ein Organohydrogensiloxan als Vernetzungsmittel in einer Menge, die ein Molverhältnis von an Silicium gebundenen Wasserstoffatomen in (B) zu an Silicium gebundenen Alkenylresten in (A) im Bereich von 1:1 bis 10:1 ergibt, wobei das Organohydrogensiloxan durchschnittlich mehr als zwei an Silicium gebundene Wasserstoffatome pro Molekül enthält, (D) 13 bis 125 Gewichtsteile pulverförmiges Molekularsieb und (E) 1 bis 20 Gewichtsteile Aluminiumoxid-Trihydrat, wobei die beiden Teile nach dem Zusammenmischen ein selbsthärtendes Elastomer bilden.

4. Silicongemisch nach einem der Ansprüche 1 bis 3, wobei das Molekularsieb einen nominalen Porendurchmesser von 0,3 Nanometer (3 Angstrom) bis 1,0 Nanometer (10 Angstrom) hat.

5. Silicongemisch nach einem der Ansprüche 1 bis 4, wobei die Menge des Molekularsiebes (D) im Bereich von 100 bis 150 Gewichtsteilen, bezogen auf 100 Gewichtsteile (A), liegt.

6. Silicongemisch nach einem der Ansprüche 1 bis 5, wobei das Aluminiumoxid-Trihydrat (E) einen mittleren Teilchendurchmesser von 1,7 bis 2,2 Mikrometer hat.

7. Silicongemisch nach einem der Ansprüche 1 bis 6, wobei die Menge des Aluminiumoxid-Trihydrats (E) im Bereich von 3 bis 20 Gewichtsteilen, bezogen auf 100 Gewichtsteile (A), liegt.

## Revendications

1. Composition de silicone comprenant
(A) 100 parties en poids de polydiorganosiloxane contenant des groupes alcényles, ayant une viscosité de 2 à 25 Pa.s à 25°C,
(B) un agent de réticulation organohydrogénosiloxane, en une proportion fournissant un rapport molaire des atomes d'hydrogène liés au silicium de (B) aux radicaux alcényles liés au silicium de (A) dans la gamme de 1:1 à 10:1, l'organohydrogénosiloxane contenant une moyenne de plus de deux atomes d'hydrogène liés au silicium par molécule,
(C) suffisamment de catalyseur au platine pour catalyser le durcissement de la composition,
(D) de 25 à 250 parties en poids, sur la base de 100 parties en poids de (A), d'un tamis moléculaire sous la forme d'une poudre, et
(E) de 1 à 40 parties en poids, sur la base de 100 parties en poids de (A), d'alumine trihydratée,
le mélange formant un élastomère auto-durcissant.

2. Composition selon la revendication 1, la composition étant conditionnée au moins en deux parties, l'organohydrogénosiloxane (B) et le catalyseur au platine (C) étant situés dans des parties séparées.

3. Composition de silicone selon la revendication 2, comprenant, en tant que première partie ; (A) 50 parties en poids de polydiorganosiloxane contenant des groupes alcényles, (C) suffisamment de catalyseur au platine pour catalyser le durcissement de la composition, (D) de 12 à 125 parties de tamis moléculaires sous la forme d'une poudre et (E) de 1 à 20 parties d'alumine trihydratée et, en tant que seconde partie ; (A) 50 parties en poids de polydiorganosiloxane contenant des groupes alcényles, (B) un agent de réticulation organohydrogénosiloxane en une quantité fournissant un rapport molaire d'atomes d'hydrogène liés au silicium de (B) aux radicaux alcényles liés au silicium de (A) dans la gamme de 1:1 à 10:1, l'organohydrogénosiloxane contenant une moyenne de plus de deux atomes d'hydrogène liés au silicium par molécule, (D) de 13 à 125 parties en poids de tamis moléculaires sous la forme d'une poudre, et (E) de 1 à 20 parties en poids d'alumine trihydratée, les deux parties, lorsqu'elles sont mélangées ensemble, formant un élastomère auto-durcissant.

4. Composition de silicone selon l'une quelconque des revendications 1 à 3, dans laquelle le tamis moléculaire a un diamètre nominal de pore de 1,3 nm à 1,0 nm.

5. Composition de silicone selon l'une quelconque des revendications 1 à 4, dans laquelle la proportion du tamis moléculaire (D) est dans la gamme de 100 à 150 parties en poids, sur la base de 100 parties en poids de (A).

6. Composition de silicone selon l'une quelconque des revendications 1 à 5, dans laquelle l'alumine trihydratée (E) a un diamètre moyen de particule de 1,7 à 2,2 µm.

7. Composition de silicone selon l'une quelconque des revendications 1 à 6, dans laquelle la proportion d'alumine trihydratée (E) est dans la gamme de 3 à 20 parties en poids, sur la base de 100 parties en poids de (A).
